# EUROPÄISCHE PATENTSCHRIFT

(11) **EP 0 674 377 B1**
(45) Veröffentlichungstag und Bekanntmachung des Hinweises auf die Patenterteilung: **12.05.1999**
(21) Anmeldenummer: 95103102.0
(22) Anmeldetag: 04.03.1995
(51) Int. Cl.: H02J 9/06

(54) **Schlüssel mit einer Sendeeinheit**
Key with a transmitter unit
Clé avec une unité d'émission

(30) Priorität: 25.03.1994 DE 4410338
(43) Veröffentlichungstag der Anmeldung: 27.09.1995
(73) Patentinhaber: TEMIC TELEFUNKEN microelectronic GmbH, 74072 Heilbronn (DE)
(72) Erfinder: Doerfler, Reiner, Dr., D-90403 Nürnberg (DE); Kuhn, Mathias, D-90542 Eckental (DE)
(74) Vertreter: Maute, Hans-Jürgen, Dipl.-Ing.

(56) Entgegenhaltungen:
- EP-A- 0 330 828
- EP-A- 0 385 502
- EP-A- 0 402 539
- WO-A-93/02897
- DE-A- 3 908 324
- DE-A- 4 100 272
- GB-A- 2 262 628
- US-A- 5 216 994

## Beschreibung

Die Erfindung betrifft einen Schlüssel gemäß dem Oberbegriff des Patentanspruchs 1.

Ein Schlüssel ist beispielsweise aus der EP-0 330 828 A1 bekannt. Der bekannte Schlüssel weist eine Sendeschaltung auf, von der aus Daten zur elektronischen Identifikation des Schlüssels als elektromagnetische Welle, z.B. HF-Signal, zu einer am Schloß vorgesehenen Empfangseinheit übertragbar sind. Die Sendeeinheit und die Empfangseinheit bilden dabei ein Datenübertragungssystem. Um einen zuverlässigen Sendebetrieb auch bei einer erschöpften Hauptenergiequelle zu ermöglichen, ist vorgesehen, eine externe Hilfsenergiequelle vorübergehend an die Sendeeinheit des Schlüssels anzuschließen und mit dieser eine am Schloß vorgesehene weitere Hilfsenergiequelle über eine Sendeantenne berührungslos aufzuladen.

Mit derartigen Schlüsseln lassen sich Geräte oder Anlagen, z.B. im Falle von Kraftfahrzeugen, Zentralverriegelungen, elektronische Wegfahrsperren, Alarmanlagen, elektrische Fensterheber und dergleichen ferngesteuert bedienen.

Aus der WO 93/02897 ist beispielsweise ein Schlüssel gemäß dem Oberbegriff des Patentanspruchs 1 für ein Kraftfahrzeug bekannt, der eine Sendeeinheit mit einer Energiequelle aufweist. Die Energiequelle kann über elektrische Kontakte aus der Kraftfahrzeugbatterie aufgeladen werden, so daß das Kraftfahrzeug auch im Falle einer Erschöpfung der Energiequelle nach einer bestimmten Aufladezeit wieder verfügbar ist.

Der Erfindung liegt die Aufgabe zugrunde, einen Schlüssel gemäß des Oberbegriffs des Anspruchs 1 anzugeben, der bei einem Ausfall der Hauptenergiequelle der Sendeeinheit noch zuverlässig funktioniert.

Diese Aufgabe wird erfindungsgemäß durch die Merkmale des Patentanspruchs 1 gelöst. Vorteilhafte Ausgestaltungen und Weiterbildungen ergeben sich aus den Unteransprüchen.

Bei dem erfindungsgemäßen Schlüssel weist die Sendeeinheit eine Hauptenergiequelle und eine Notstromeinheit mit einer Überwachungseinheit, die den Energiegehalt der Hauptenergiequelle kontrolliert, auf. Solange die Energie der Hauptenergiequelle, vorzugsweise eine Batterie, für einen zuverlässigen Sendebetrieb der Sendeeinheit ausreicht, befindet sich das Datenübertragungssystem im Normalbetrieb. Sobald die Überwachungseinheit der Notstromeinheit den Ausfall der Hauptenergiequelle, d. h. einen für den Sendebetrieb der Sendeeinheit unzureichenden Energiegehalt erkennt, wird die Sendeeinheit in einen zweiten Betriebsmodus - den Notbetrieb - geschaltet, in dem ihre Energieversorgung über eine Hilfsenergiequelle erfolgt.

Die Hilfsenergiequelle ist eine interne, in der Notstromeinheit vorgesehene Energiequelle, vorzugsweise eine Batterie oder eine Energiequelle, die ihre Energie durch induktive Kopplung von einer äußeren Energiequelle erhält - beispielsweise eine Induktionsspule. Im Falle der durch induktive Kopplung übertragenen Energie muß die Energie der Hilfsenergiequelle in einer in der Notstromeinheit vorgesehenen Gleichrichterschaltung als Gleichspannung aufbereitet werden. Bei einer derartigen Hilfsenergiequelle kann im Notbetrieb auch die Datenübertragung induktiv erfolgen. Gegenüber der Daten/Energieübertragung über einen Anschlußkontakt bietet diese Art der Daten/Energieübertragung den Vorteil einer höheren Zuverlässigkeit, da bei der induktiven Kopplung keine Kontakte, die verschmutzten oder korrodieren können, vorhanden sind.

Die Hilfsenergiequelle stellt vorzugsweise weniger Energie als die Hauptenergiequelle zur Verfügung. Die daraus resultierende geringere Sendereichweite der Sendeeinheit dient zur Anzeige des Notbetriebs. Der Notbetrieb kann zusätzlich, vorzugsweise optisch oder akustisch, angezeigt werden.

Der erfindungsgemäße Schlüssel ist vorzugsweise in motorbetriebenen Kraftfahrzeugen zur Bedienung von elektrischen Sicherungssystemen, z.B. Wegfahrsperren, Schließanlagen, Fensterhebern, Alarmanlagen einsetzbar. Die Verfügbarkeit des Kraftfahrzeuges bleibt erhalten, auch wenn die Hauptenergiequelle der Sendeeinhelt ausfällt, da in diesem Fall die Sendeeinheit im Notbetrieb arbeitet und von der Hilfsenergiequelle versorgt wird.

Der erfindungsgemäße Schlüssel läßt sich überall dort einsetzen, wo eine Unterbrechung der Datenübertragung aufgrund einer leistungsschwachen Energiequelle unerwünscht ist.

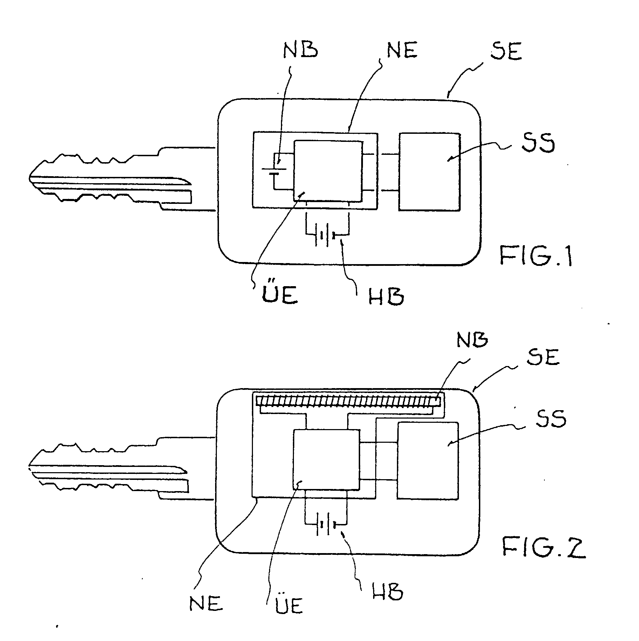

Die Erfindung wird im folgenden anhand der Figuren 1 und 2 näher beschrieben. Es zeigen:
- Figur 1: ein Ausführungsbeispiel eines Schlüssels mit einer Sendeeinheit eines Datenübertragungssystems,
- Figur 2: ein zweites Ausführungsbeispiel eines Schlüssels mit einer Sendeeinheit eines Datenübertragungssystems.

Bei diesen Ausführungsbeispielen handelt es sich jeweils um Anwendungen aus dem Kraftfahrzeugbereich. Das Schlüsselgehäuse des Zündschlüssels ist hierbei gleichzeitig auch die Sendeeinheit SE, mit der eine Wegfahrsperre ausgeschaltet wird.

Figur 1 zeigt eine Sendeeinheit SE mit der Hauptenergiequelle HB, mit der Notstromeinheit NE, welche eine Überwachungseinheit ÜE und eine Hilfsenergiequelle NB aufweist, und mit der Sendeschaltung SS, die Daten als HF-Signal zur Empfangseinheit sendet. Bei der Hauptenergiequelle HB handelt es sich um zwei in Reihe geschaltete 3-V-Lithium-Batterien, bei der Hilfsenergiequelle NB um eine 3-V-Lithium-Batterie. Die Sendeschaltung SS wird folglich im Normalbetrieb von einer 6-V-Spannungsquelle und im Notbetrieb von einer 3-V-Spannungsquelle versorgt. Sobald die Spannung der Hauptenergiequelle HB eine im Bereich von 4 V bis 4,5 V liegende Schaltschwelle unterschreitet, wird die Sendeeinheit SE in den Notbetrieb geschaltet. Die beiden 3-V-Lithium-Batterien der Hauptenergiequelle HB werden dabei abgeschaltet und die 3-V-Lithium-Batterie der Hilfsenergiequelle NB mit der Sendeschaltung SS verbunden. Die Schaltschwelle, bei der eine Umschaltung der Betriebsmodi erfolgt, liegt um 1 V bis 1,5 V höher als die Spannung der Hilfsenergiequelle NB. Das ist sinnvoll, da eine 3-V-Batterie einen höheren Strom liefert als zwei in Reihe geschaltete verbrauchte 3-V-Batterien, die gemeinsam nur noch eine Spannung von 4 V bis 4,5 V liefern. Wegen der geringeren Versorgungsspannung hat die Sendeeinheit SE im Notbetrieb eine kleinere Sendereichweite als im Normalbetrieb. Daran erkennt der Anwender, daß die Hauptenergiequelle HB verbraucht ist und die beiden in Reihe geschalteten 3-V-Lithium-Batterien ausgetauscht werden müssen.

Die Hilfsenergiequelle NB im Ausführungsbeispiel gemäß Figur 2 ist als Induktionsspule ausgebildet. Diese erhält ihre Energie induktiv von einer äußeren Induktionsspule, die beispielsweise am Zündschloß des Kraftfahrzeugs angebracht ist. Da die Sendeschaltung SS von einer Gleichspannungsquelle versorgt werden muß, befindet sich in der Notstromeinheit NE ein in der Figur 2 nicht dargestellter Gleichrichter. Dieser bereitet die im Notbetrieb induktiv übertragende Energie als Gleichspannung auf. Im Notbetrieb ist auch die induktive Übertragung der Daten von der Sendeeinheit SE zur Empfangseinheit möglich.

## Patentansprüche

1. Schlüssel mit einer Sendeeinheit (SE), die eine Sendeschaltung (SS), eine Hauptenergiequelle (HB) und eine Hilfsenergiequelle (NB) aufweist, wobei zwischen der Sendeeinheit (SE) und einer Empfangseinheit eines aus der Sendeeinheit (SE) und Empfangseinheit gebildeten Datenübertragungssystems Daten zur elektronischen Identifikation des Schlüssels übertragbar sind, dadurch gekennzeichnet,
- daß die Sendeeinheit (SE) eine Notstromeinheit (NE) mit einer den Energiegehalt der Hauptenergiequelle (HB) kontrollierenden Überwachungseinheit (ÜE) aufweist,
- daß von der Überwachungseinheit (ÜE) als Betriebsmodi des Datenübertragungssystems ein Normalbetrieb und ein Notbetrieb in Abhängigkeit des Energiegehalts der Hauptenergiequelle (HB) vorgebbar sind, wobei der Notbetrieb bei einem für einen zuverlässigen Sendebetrieb der Sendeeinheit (SE) nicht ausreichenden Energiegehalt der Hauptenergiequelle (HB) vorgegeben ist, und
- daß die Sendeeinheit (SE) im Normalbetrieb von der Hauptenergiequelle (HB) und im Notbetrieb von der Hilfsenergiequelle (NB) mit Spannung versorgt ist.

2. Schlüssel nach Anspruch 1, dadurch gekennzeichnet, daß die Hauptenergiequelle (HB) der Sendeeinheit (SE) eine Batterie ist.

3. Schlüssel nach einem der vorherigen Ansprüche, dadurch gekennzeichnet, daß die Hilfsenergiequelle (NB) eine geringere Energie als die Hauptenergiequelle (HB) zur Verfügung stellt.

4. Schlüssel nach einem der vorherigen Ansprüche, dadurch gekennzeichnet, daß die Sendeeinheit (SE) im Notbetrieb eine geringere Sendereichweite als im Normalbetrieb aufweist.

5. Schlüssel nach einem der vorherigen Ansprüche, dadurch gekennzeichnet, daß der Notbetrieb durch die Sendeeinheit (SE) optisch oder akustisch anzeigbar ist.

6. Schlüssel nach einem der vorherigen Ansprüche, dadurch gekennzeichnet, daß die Hilfsenergiequelle (NB) der Sendeeinheit (SE) eine Batterie ist.

7. Schlüssel nach einem der vorherigen Ansprüche, dadurch gekennzeichnet, daß die Hilfsenergiequelle (NB) ihre Energie induktiv von einer außerhalb der Sendeeinheit (SE) angeordneten Energiequelle erhält.

8. Schlüssel nach Anspruch 7, dadurch gekennzeichnet, daß in der Notstromeinheit (NE) eine Gleichrichterschaltung zur Erzeugung einer Gleichspannung aus der Energie der Hilfsenergiequelle (NB) vorgesehen ist.

9. Schlüssel nach Anspruch 7 oder 8, dadurch gekennzeichnet, daß die Daten von der Sendeeinheit (SE) induktiv zur Empfangseinheit übertragbar sind.

10. Schlüssel nach einem der vorherigen Ansprüche, dadurch gekennzeichnet, daß die Daten von der Sendeeinheit (SE) als elektromagnetische Wellen zur Empfangseinheit übertragen werden.

11. Verwendung des Schlüssels nach einem der vorherigen Ansprüche, zur Bedienung von Diebstahlsicherungen, elektronischen Wegfahrsperren, Zentralverriegelungen, Alarmanlagen oder elektrischen Fensterhebern in motorbetriebenen Kraftfahrzeugen.

## Claims

1. Key including a transmitter unit (SE) which comprises a transmitter circuit (SS), a main energy source (HB) and an auxiliary energy source (NB), wherein data for electronically identifying the key is transmissible between the transmitter unit (SE) and a receiver unit of a data transmission system which is formed by the transmitter unit (SE) and the receiver unit, characterised in that,
- the transmitter unit (SE) comprises an emergency power unit (NE) including a monitoring unit (ÜE) which monitors the amount of energy in the main energy source (HB),
- a normal operational mode and an emergency operational mode are settable by the monitoring unit (ÜE) as the operational modes of the data transmission system in dependence on the amount of energy in the main energy source (HB), whereby the emergency mode is set when the amount of energy in the main energy source (HB) is not sufficient to support reliable transmissions from the transmitter unit (SE), and
- the transmitter unit (SE) is supplied with power by the main energy source (HB) in the normal operational mode and by the auxiliary energy source (NB) in the emergency operational mode.

2. Key in accordance with Claim 1, characterised in that the main energy source (HB) for the transmitter unit (SE) is a battery.

3. Key in accordance with either of the preceding Claims, characterised in that the auxiliary energy source (NB) provides a smaller amount of energy than the main energy source (HB).

4. Key in accordance with any of the preceding Claims, characterised in that the transmitter unit (SE) has a shorter transmission range in the emergency operational mode than it has in the normal operational mode.

5. Key in accordance with any of the preceding Claims, characterised in that the emergency operational mode is indicatable optically or acoustically by the transmitter unit (SE).

6. Key in accordance with any of the preceding Claims, characterised in that the auxiliary energy source (NB) for the transmitter unit (SE) is a battery.

7. Key in accordance with any of the preceding Claims, characterised in that the auxiliary energy source (NB) obtains its energy inductively from a source of energy located externally of the transmitter unit (SE).

8. Key in accordance with Claim 7, characterised in that a rectifier circuit is provided in the emergency power unit (NE) for producing a dc voltage from the energy of the auxiliary energy source (NB).

9. Key in accordance with Claim 7 or 8, characterised in that the data is transmissible inductively from the transmitter unit (SE) to the receiver unit.

10. Key in accordance with any of the preceding Claims, characterised in that the data is transmitted from the transmitter unit (SE) to the receiver unit in the form of an electromagnetic wave.

11. Use of the key in accordance with any of the preceding Claims for actuating anti-theft devices, electronic immobilisers, central locking systems, alarm systems or electric windows in engine driven motor vehicles.

## Revendications

1. Clé comportant une unité émettrice (SE) qui présente un circuit émetteur (SS), une source d'énergie principale (HB) et une source d'énergie auxiliaire (NB), des données servant à l'identification électronique de la clé étant transmissibles entre l'unité émettrice (SE) et une unité réceptrice d'un système de transmission de données formé par l'unité émettrice (SE) et par l'unité réceptrice, caractérisée en ce que :
- l'unité émettrice (SE) présente une unité de courant de secours (NE) avec une unité de contrôle (ÜE) contrôlant le taux d'énergie de la source d'énergie principale (HB),
- un fonctionnement normal et un fonctionnement de secours sont susceptible d'être prédéterminés par l'unité de contrôle (ÜE) en tant que modes de fonctionnement du système de transmission des données, en fonction du taux d'énergie de la source d'énergie principale (HB), le fonctionnement de secours étant prédéterminé au cas où le taux d'énergie de la source d'énergie principale (HB) ne suffit pas pour un fonctionnement d'émission fiable de l'unité émettrice (SE), et en ce que :
- l'unité émettrice (SE) est alimentée par la source d'énergie principale (HB) en cas de fonctionnement normal et par la source d'énergie auxiliaire (NB) en cas de fonctionnement de secours.

2. Clé selon la revendication 1, caractérisée en ce que la source d'énergie principale (HB) de l'unité émettrice (SE) est une pile.

3. Clé selon l'une des revendications précédentes, caractérisée en ce que la source d'énergie auxiliaire (NB) fournit une énergie plus faible que la source d'énergie principale (HB).

4. Clé selon l'une des revendications précédentes, caractérisée en ce que l'unité émettrice (SE) présente en cas de fonctionnement de secours une portée émettrice plus faible qu'en cas de fonctionnement normal.

5. Clé selon l'une des revendications précédentes, caractérisée en ce que le fonctionnement de secours est susceptible d'être affiché de manière optique et acoustique par l'unité émettrice (SE).

6. Clé selon l'une des revendications précédentes, caractérisée en ce que la source d'énergie auxiliaire (NB) de l'unité émettrice (SE) est une pile.

7. Clé selon l'une des revendications précédentes, caractérisée en ce que la source d'énergie auxiliaire (NB) reçoit son énergie par induction depuis une source d'énergie agencée en dehors de l'unité émettrice (SE).

8. Clé selon la revendication 7, caractérisée en ce que dans l'unité de courant de secours (NE) est prévu un circuit redresseur pour engendrer une tension continue depuis l'énergie de la source d'énergie auxiliaire (NB).

9. Clé selon l'une ou l'autre des revendications 7 et 8, caractérisée en ce que les données sont transmissibles par induction depuis l'unité émettrice (SE) vers l'unité réceptrice.

10. Clé selon l'une des revendications précédentes, caractérisée en ce que les données sont transmises depuis l'unité émettrice (SE) vers l'unité réceptrice sous forme d'ondes électromagnétiques.

11. Utilisation de la clé selon l'une des revendications précédentes, pour faire fonctionner des antivols, des blocages électroniques de démarrage, des verrouillages centralisés, des systèmes d'alarme ou des lève-vitres électriques dans des véhicules motorisés.
